# EUROPÄISCHE PATENTSCHRIFT

(11) **EP 0 642 197 B1**
(45) Veröffentlichungstag und Bekanntmachung des Hinweises auf die Patenterteilung: **12.03.1997**
(21) Anmeldenummer: 94108408.9
(22) Anmeldetag: 01.06.1994
(51) Int. Cl.: H02B 1/20, H02B 1/015

(54) **Geräteträger für elektrische Installationsgeräte**
Device carrier for electric installation devices
Support d'appareils pour appareils d'installation électrique

(30) Priorität: 01.09.1993 CH 2592/93
(43) Veröffentlichungstag der Anmeldung: 08.03.1995
(73) Patentinhaber: SPRECHER + SCHUH AG, CH-5001 Aarau (CH)
(72) Erfinder: Rischard, Karl, CH-5016 Obererlinsbach (CH); Hilfiker,Peter, CH-5033 Buchs (CH); Mathiowetz,Jörg, D-65366 Geisenheim (DE); Fuchs,Emil, D-65345 Eltville-Rauenthal (DE); Müller,Markus, D-65343 Eltville am Rhein (DE)
(74) Vertreter: Morva, Tibor

(56) Entgegenhaltungen:
- DE-A- 4 124 487
- DE-C- 3 811 570
- US-A- 4 931 903

## Beschreibung

Die vorliegende Erfindung betrifft einen Geräteträger für elektrische Installationsgeräte mit einem für die Aufnahme mindestens eines Installationsgerätes vorgesehenen Adapteroberteil und mit einem mit einer Halterung verbindbaren Adapterunterteil, wobei das Adapteroberteil und das Adapterunterteil miteinander verbindbar sind.

Aus der DE-A1-4124487 ist ein Geräteträger der eingangs erwähnten Art bekannt. Der dort beschriebene Adapter dient zum befestigen und Anschliessen von elektrischen Geräten. Ein Adapterunterteil ist dabei an Sammelschienen befestigt. Dieser Adapterunterteil ist mit einem Adapteroberteil bestückbar, um die unterschiedlichen Einbautiefen der daran befestigbaren elektrischen Geräte auszugleichen. Bei dieser Anordnung müssen zu allen vorgesehenen Einbautiefen entsprechende Adapteroberteile vorbereitet sein, wodurch wirtschaftliche Nachteile erwachsen. Der Adapteroberteil ist nur an einem an Sammelschienen befestigten Adapterunterteil anbringbar, eine andere Anwendung ist nicht vorgesehen. Die Anwendbarkeit dieses Geräteträgers ist daher beschränkt.

Aus der US-A-4931903 ist eine Versorgungseinheit mit einer Grundplatte und mit einem Deckel aus Kunststoff bekannt. Die Grundplatte trägt spnannungführende Sammelschienen und mehrere die Abgangsleitungen schützende Schalter. Die Schalter sind dabei auf die Sammelschienen steckbar ausgebildet. Ein Adapter kann auf die Grundplatte befestigt werden, der für die Aufnahme verschiedener Hilfsgeräte vorgesehen ist. Der Adapter ist so ausgebildet, dass mehrere Hilfsgeräte daran befestigt werden können. Wenn weniger Hilfsgeräte gebraucht werden als Plätze vorhanden sind, ist der Adapter nicht voll ausgenützt. Eine Erweiterung der Befestigungsplätze für die Hilfsgeräte ist nicht vorgesehen. Die in der Versorgungseinheit untergebrachten Sammelschienen sind über Kabel angeschlossen. Die ganze Versorgungseinheit kann nur an einer Wand befestigt werden. Gesamthaft gesehen ist diese Versorgungseinheit nur für eine ganz bestimmte Anzahl Abgänge und Hilfsgeräte wirtschaftlich vorteilhaft.

Die DE-C1-3811570 beschreibt einen einteiligen Adapter zur Aufnahme der unterschiedlichsten elektrischen Installationsgeräte. Um die unterschiedliche Breite der am Adapter zu befestigenden elektrischen Geräte auszugleichen, sind bei diesem Adapter zusätzliche, an den Seiten des Adapters anbringbare, der jeweiligen Gerätebreite angepasste Anreihgehäusen vorgesehen, die wirtschaftliche Nachteile mit sich bringen.

Ein weiterer Geräteträger für elektrische Installationsgeräte ist aus der DE-C2-2646123 bekannt. Bei diesem erfolgt die Verbindung des elektrischen Installationsgerätes mit dem Geräteträger mittels einer Tragschiene, auf die der Fuss des Installationsgerätes aufsteckbar ist. Nachteilig ist bei dem bekannten Geräteträger, dass er aufgrund dessen Einteiligkeit keine weitgehende Vormontage des bzw. der elektrischen Installationsgeräte gestattet.

Es ist Aufgabe der Erfindung, einen Geräteträger für elektrische Installationsgeräte zu schaffen, der universell einsetzbar und insbesondere für eine Modulbauweise geeignet ist, die eine weitgehende Vormontage des bzw. der elektrischen Installationsgeräte mit dem Geräteträger ermöglicht.

Die gestellte Aufgabe ist dadurch gelöst, dass jeder Adapteroberteil wahlweise mit einem an einer Halterung in Art einer Wandung befestigbaren Adapterunterteil oder mit einem an einer Halterung in Art eines Sammelschienensystems befestigbaren Adapterunterteil zusammensteckbar und in der zusammengesteckten Position rastierbar ist, wobei mit einem Adapterunterteil definierter Baugrösse Adapteroberteile unterschiedlicher Baugrösse verbindbar sind, und dass jeder Adapteroberteil mit einem dem Geräteträger nicht zugeordneten, zur Aufnahme mindestens eines Installationsgerätes bestimmten, weiteren Adapteroberteil gleicher oder unterschiedlicher Baugrösse verbindbar ist. Das bzw. die Installationsgeräte werden entsprechend dem benötigten Platzbedarf mit einem oder mehreren, die entsprechende Baugrösse aufweisenden Adapteroberteilen verbunden. Die Adapterunterteile sind entweder an Halterungen, wie an einer Wand oder an einem Sammelschienensystem befestigt. Die Adapteroberteile und die Adapterunterteile sind aneinander durch eine Steckverbindung einfach befestigbar. Um die Steckverbindung zu sichern, sind die Teile in der zusammengesteckter Position rastierbar. Ein wesentliches weiteres Element der Erfindung besteht darin, dass mit einem Adapterunterteil definierter Baugrösse Adapteroberteile unterschiedlicher Baugrösse verbindbar sind. Wird für die Befestigung des bzw. der elektrischen Installationsgeräte am Adapteroberteil viel Platz benötigt, findet ein Adapteroberteil mit entsprechend grossen Abmessungen Verwendung, das mit dem Standardgrösse aufweisenden Adapterunterteil verbunden wird. Benötigt das elektrische Installationsgerät wenig Platz, findet ein Adapteroberteil mit geringeren Abmessungen Verwendung, das gleichfalls mit einem Standardgrössen aufweisenden Adapterunterteil verbunden wird. Zweckmässig sind damit die Abmessungen des Adapterunterteiles im Bereich dessen Aufnahme des Adapteroberteiles auf die kleinste Baugrösse des Adapteroberteiles abzustimmen. Das Adapteroberteil eines Geräteträgers ist mit einem weiteren diesem Geräteträger nicht zugeordnetn Adapteroberteil verbindbar, das der Aufnahme mindestens eines Installationsgerätes dient. Es ist damit vorgesehen, nicht nur eine Verbindung eines Adapteroberteiles mit einem Adapterunterteil zur Bildung eines Geräteträgers zu schaffen, sondern auch eine Verbindung zweier, gegebenenfalls auch mehrerer Adapteroberteile unmittelbar miteinander anzugeben, so dass die Befestigungsfläche für das bzw. die Installationsgeräte beliebig vergrösser werden kann. Der so ausgebildete Geräteträger ist universell einsetzbar, für eine Modulbauweise geeignet und ermöglicht eine weitgehende Vormontage des bzw. der elektrischen Installationsgeräte.

Die Stromzuführung zu dem jeweiligen Installationsgerät kann auf unterschiedliche Art und Weise erfolgen. Bei der Verwendung des Gräteträgers im Zusammenhang mit einem Sammelschienensystem erfolgt der Stromanschluss zum jeweiligen Installationsgerät bevorzugt über ein elektrieches Kabel, das einerseits unmittelbar mit dem Installationsgerät, anderseits über Kontaktfedern oder dergleichen mit der zugeordneten Sammelschiene elektrisch leitend verbunden ist, wobei die Kontaktfedern im Adapterunterteil gelagert sind und sich an der zugeordneten Sammelschiene abstützen. Das jeweilige elektrische Kabel kann dabei seitlich aus dem Geräteträger herausgeführt sein. Grundsätzlich und dies gilt insbesondere dann, wenn kein Sammelschienensystem vorhanden ist, kann die Stromspeisung des jeweiligen Installationsgerätes von extern mittels der erforderlichen elektrischen Leitungen erfolgen.

Das Ziel, mit möglichst wenig unterschiedlichen Bauteilen des Geräteträgers für dessen unterschiedlichste Einsatzzwecke auszukommen, mit der Folge geringerer Formkosten für die aus Kunststoff bestehenden Bauteile, geringerer Lagerhaltungskosten usw., wird dadurch erreicht, dass die Adapteroberteile unterschiedlicher Baugrösse im Verbindungsbereich zum Adapterunterteil identisch ausgebildet sind. Eine Weiterbildung des Geräteträgers sieht vor, dass die Verbindung von Adapteroberteil und Adapterunterteil durch Zusammenstecken von Adapteroberteil und Adapterunterteil sowie deren anschliessende Relativbewegung in der Trennebene zwischen Adapteroberteil und Adapterunterteil erfolgt, wobei das Adapteroberteil Haltenasen aufweist, die beim Relativbewegen der Teile Haltestege am Adapterunterteil hintergreifen. Selbstverständlich bestünde auch die Möglichkeit, die Haltenasen am Adapterunterteil und die Haltestege am Adapteroberteil vorzusehen. Die Rastierung von Adapteroberteil und Adapterunterteil erfolgt zweckmässig mittels mindesten einer Rastierzunge, die in der Rastierposition einen Rastioersteg des Adapterunterteils hintergreift.

Da das Adapteroberteil primär die Aufgabe erfüllt, als Lagerung für das bzw, die Installationsgeräte zu dienen, ist gemäss einer bevorzugten Gestaltung vorgesehen, dass es plattenförmig ausgebildet ist. Durch die recht einfache Gestaltung dieses Bauteiles kann es mit geringem Kostenaufwand hergestellt werden und benötigt nur einen relativ geringen Bedarf an Lagerfläche.

Das Adapterunterteil kann plattenförmig ausgebildet sein und Ausnehmungen zum Aufhängen des Adapterunterteils in mit der Wandung verbundenen Befestigungsmitteln aufweisen. Durch diese Massnahme ist eine einfache Wandmontage des Adapterunterteiles möglich.

Vorteilhafterweise ist das Adapterunterteil kastenförmig ausgebildet und weist auf seiner dem Adapteroberteil abgewandten Seite Hakenansätze zum Hintergreifen der Sammelschienen auf. Die kastenförmige Gestaltung des Adapterunterteils wird in diesem Zusammenhang deshalb als zweckmässig angesehen, weil dann im Adapterunterteil zumindest die Mittel zum festlegen des Geräteträgers in der Ebene der Sammelschienen senkrecht zu deren Längserstreckung sowie die elktrischen Kontakte für die Sammelschienen, die über elektrische Leitungen mit dem bzw. den Installationsgeräten verbunden sind, angeordnet werden können. Gerade bei einer Verwendung des Geräteträgers im Zusammenhang mit einem Sammelschienensystem wird es als notwendig angesehen, zumindest im Bereich der jeweiligen Stirnseite des Geräteträgers, konkret des Adapterunterteiles, einen Uebergreifschutz vorzusehen, der eine Berührung der Sammelschienen von dieser Seite unmöglich macht.

Es ist vorteilhaft, wenn das weitere Adapteroberteil mit einem anderen Adapterunterteil verbunden ist, in der Konsequenz, dass zwei nebeneinander angeordnete Geräteträger mittels der beiden aneinander angrenzenden Adapteroberteile der Geräteträger miteinander befestigt werden. Es ist aber auch denkbar, zwei Geräteträger in Abstand zueinander anzuordnen und mittels eines zwischen den Adapteroberteilen dieser Geräteträger angeordneten Adapteroberteiles, dem kein Adapterunterteil zugeordnet ist, eine Brücke zwischen den beiden Geräteträgern zu bilden. Selbstverständlich können auch mehrere Adapteroberteile die Brücke zwischen den Geräteträgern bilden. Die letztgenannte Variante bietet sich insbesondere dann an, wenn die Geräteträger im Zusammenhang mit einem elektrischen Sammelschienensystem Verwendung finden.

Die Befestigung der Adapteroberteile untereinander erfolgt zweckmäßig in den einander zugewandten Bereichen der Adapteroberteile mittels Verbindungselementen. Das jeweilige Verbindungselement zum Verbinden der benachbarten Adapteroberteile ist vorteilhaft in diesen in Art einer Klips-Verbindung rastierbar. Die Adapteroberteile sollten in den Bereichen, in denen deren Verbindung untereinander erfolgt, ausreichend große, zusammenwirkende Anlageflächen aufweisen, so daß nach dem Anbringen der Verbindungselemente eine starre Einheit der Adapteroberteile gewährleistet ist.

Eine konkrete Gestaltung der Verbindung sieht in diesem Zusammenhang vor, daß der jeweilige Lochsteg des Adapteroberteils und des mit diesem zu verbindenden weiteren Adapteroberteils auf der dem jeweils anderen Adapteroberteil zugewandten Seite mit mindestens einem in Längsrichtung des Lochstegs hinterschnittenen Ansatz versehen ist, wobei die Ansätze der zu verbindenden Adapteroberteile bezüglich deren Trennlinie spiegelbildlich zueinander angeordnet sind und das den beiden Ansätzen zugewandte Verbindungselement mit zwei Stegen versehen ist, die in die hinterschnittenen Bereiche einschiebbar sind. Bei dieser Gestaltung besteht die Möglichkeit, das jeweilige Verbindungselement zunächst in das eine Adapteroberteil einzuschieben und mit diesem zu rastieren und anschließend das andere Adapteroberteil auf das Verbindungselement aufzuschieben, bis es rastiert.

Weitere Vorteile der Erfindung sind in den Unteransprüchen, der Beschreibung der Figuren und in den Figuren selbst dargestellt, wobei bemerkt wird, daß alle Einzelmerkmale und alle Kombinationen von Einzelmerkmalen erfindungswesentlich sind.

In den Figuren ist die Erfindung für die zwei grundsätzlichen Ausführungsformen beispielsweise dargestellt, ohne auf diese beschränkt zu sein.

Es zeigt:
- Figur 1: eine erste Ausführungsform des für Sammelschienensysteme Verwendung findenden Geräteträgers, in einer räumlichen Explosionsdarstellung,
- Figur 2: eine räumliche Ansicht des in Figur 1 gezeigten Geräteträgers, in zusammengebautem Zustand, ohne dargestellte Tragschiene,
- Figur 3: eine räumliche Darstellung mehrerer Geräteträger nach Figur 2, vor deren Verbindung, ferner das in diesem Zusammenhang Verwendung findende Sammelschienensystem,
- Figur 4: eine räumliche Darstellung zweier miteinander verbundener Adapteroberteile,
- Figur 5: eine räumliche Ansicht gemäß Figur 4, vor dem Verbinden der beiden Adapteroberteile mit einem dritten Adapteroberteil,
- Figur 6: zwei Geräteträger, die mittels zweier weiterer Adapteroberteile in Brückenbauweise miteinander verbunden sind,
- Figur 7: die zweite Ausführungsform des Geräteträgers, bei der das Adapterunterteil plattenförmig ausgebildet ist und dem Aufhängen an einer Wand dient und
- Figur 8: eine Ansicht A des in Figur 7 gezeigten plattenförmigen Adapterunterteils.

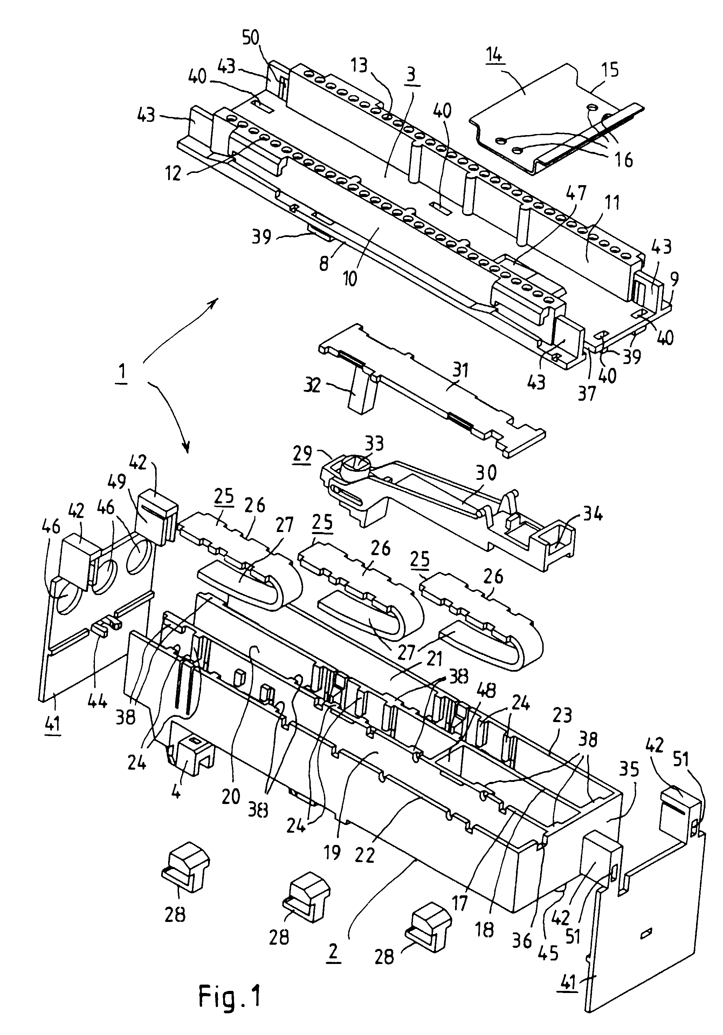

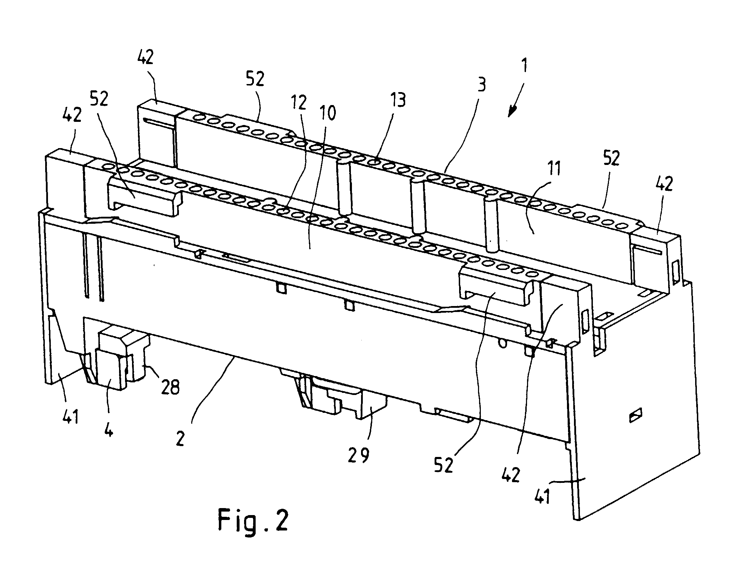

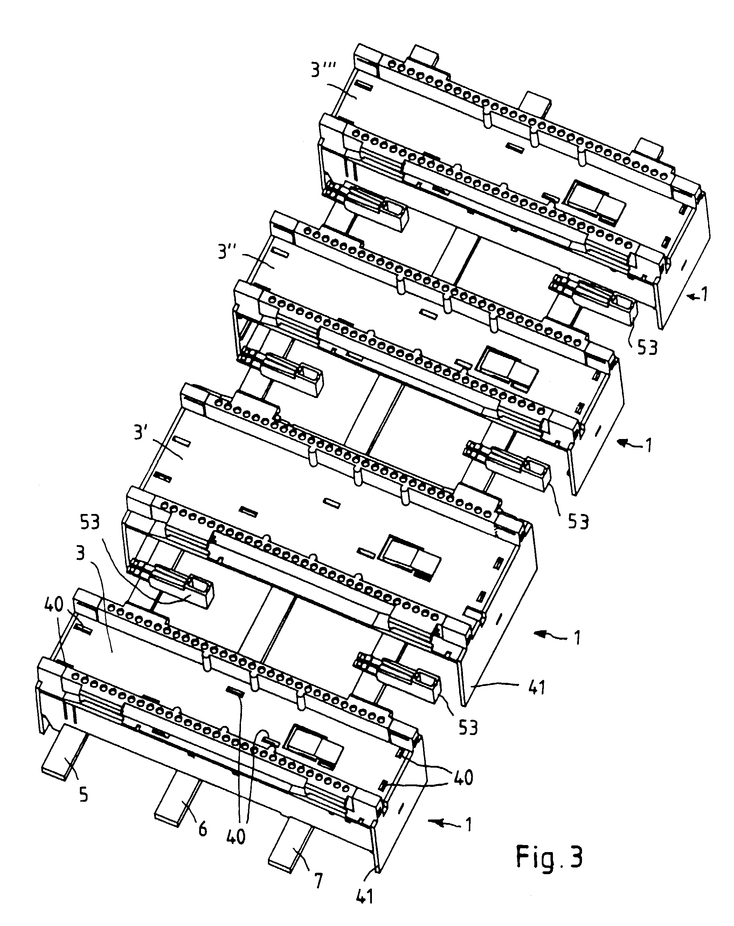

Hinsichtlich des Geräteträgers für elektrische Installationsgeräte, der im Zusammenhang mit einem elektrischen Sammelschienensystem Verwendung findet, wird auf die Darstellung der Figuren 1 und 2 und teilweise auf die der Figur 3 Bezug genommen. Dort ist veranschaulicht, daß der Geräteträger 1, der bis auf dessen für die Stromleitung erforderlichen Bauteile aus Kunststoff besteht, ein kastenförmiges Adapterunterteil 2 und ein im wesentlichen plattenförmig ausgebildetes Adapteroberteil 3 aufweist. Das Adapterunterteil 2 ist an seiner Unterseite mit drei Kontaktfüßen 4 versehen, von denen nur einer sichtbar ist, die drei parallel beabstandet zueinander angeordnete Sammelschienen 5, 6 und 7 in bekannter Art und Weise hintergreifen. Das längliche Adapterunterteil 2 ist dabei senkrecht zur Längserstreckung der Sammelschienen orientiert. Mit dem Adapterunterteil 2 ist das Adapteroberteil 3 verbindbar bzw. verbunden. Es weist in dessen Längsrichtung zwei benachbart zu den Längskanten 8 und 9 des Adapteroberteiles 3 verlaufende, parallele Stege 10 und 11 mit Lochreihen 12 und 13 auf. Eine Tragschiene 14, die etwa so lang ist, wie das Adapteroberteil 3 breit ist, weist im Bereich ihres Mittelsteges 15 vier Bohrungen 16 auf, wobei jeweils zwei Bohrungen 16 der Lochreihe 12 bzw. 13 zugeordnet sind und damit die Befestigung der Tragschiene 14 über vier Schrauben in den entsprechenden Löchern der Lochreihen 12 und 13 an beliebiger Stelle des Adapteroberteiles 3 erfolgen kann. Die Schrauben schneiden sich dabei in die jeweiligen Löcher der Lochreihen 12 und 13. Die Tragschiene 14 dient der Befestigung eines oder mehrerer, nicht gezeigter elektrischer Installationsgeräte, beispielsweise einer Starterkombination für ein Elektromotor, eines Leitungsschutzschalters oder eines Fehlerschutzschalters. Mit dem Adapteroberteil 3 können auch mehrere Tragschienen 14 verbunden sein.

Wie insbesondere der Darstellung der Figur 1 zu entnehmen ist, weist das kastenförmige Adapterunterteil 2 zwei Trennstege 17 und 18 auf, die das Adapterunterteil 2 in drei Längskammern 19, 20 und 21 unterteilen. In jeder Längskammer ist in mit den Trennstegen 17 bzw. 18 bzw. den Längswandungen 22 und 23 des Adapterunterteiles 2 eingegossenen Führungen 24 eine U-förmige Kontaktfeder 25 im Bereich deren profilierten Abschnitten 26 gehalten. Der nicht profilierte, andere Schenkel 27 der jeweiligen Kontaktfeder 25 liegt bei auf die Sammelschienen 5, 6 und 7 aufgestecktem Geräteträger 1 an der zugeordneten Sammelschiene an. Damit der Geräteträger 1 für die unterschiedlichsten Sammelschienenstärken Verwendung finden kann, sind auf die Kontaktfüße 4 aufschiebbar Distanzfußstücke 28 vorgesehen, die bei dünneren Sammelschienen den Abstand des auf die dickste mögliche Sammelschiene ausgelegten Kontaktfußes 4 ausgleichen. Auf das freie Ende des profilierten Abschnittes 26 der jeweiligen Kontaktfeder 25 ist eine nicht gezeigte Steckverbindung aufsteckbar, die mit einer elektrischen Leitung verbunden ist, die zum elektrischen Installationsgerät führt. Diese elektrischen Komponenten sind nicht gezeigt.

Wie beschrieben, wird das Adapterunterteil 2 senkrecht zur Längserstreckung der Sammelschienen 5, 6 und 7 in deren Ebene mit dem jeweiligen Kontaktfuß 4 bzw. mit dem Distanzfußstück 28 versehenen Kontaktfuß 4 auf die zugeordnete Sammelschiene 5, 6 oder 7 auf2geschoben. Um in dieser Verschieberichtung das Adapterunterteil 2 zu arretieren, ist ein betätigbares Rastelement 29 vorgesehen, das in Wirkverbindung mit der mittleren Sammelschiene 6 bringbar ist. Das Rastelement ist in einem Betätigungshebel 30 gelagert, der seinerseits im Bereich der Sammelschiene 7 im Trennsteg 17 und der dieser benachbarten Seitenwandung 22 gehalten ist. Das Rastelement 29 ist auf der der Sammelschiene 6 zugewandten Seite stufenförmig ausgebildet, so daß es, unabhängig von der vorgegebenen Breite der Sammelschiene 6, diese auf der dem der Sammelschiene 6 zugeordneten Kontaktfuß 4 abgewandten Seite hintergreift. Eine im Trennsteg 17 und der benachbarten Seitenwandung 22 gelagerte Abdeckplatte 21 deckt den Betätigungshebel 30 ab und ist im Bereich seines dem Rastelement 29 zugewandten Endes mit einem Führungszapfen 32 versehen, das eine Ausnehmung 33 im Rastelement 29 durchsetzt und es damit führt. Der Betätigungshebel 30 kann im Bereich seines dem Rastelement 29 abgewandten Endes 34 betätigt werden, hierfür ist die eine Stirnplatte 35 des kastenförmigen Adapterunterteiles 2 mit einer Ausnehmung 36 und einer entsprechenden Stelle des Adapteroberteiles 3 mit einer Ausnehmung 37 versehen, durch die ein Gegenstand zum Niederdrücken des Endes 34 des Betätigungshebels 30 gestecktwerden kann, so daß das Rastelement 29 außer Kontakt mit der Sammelschiene 6 gelangt. Nicht gezeigt ist in der Figur 1 eine zwischen der Abdeckplatte 31 und dem Betätigungshebel 30 wirksame Druckfeder, die den Führungszapfen 32 umgibt und das Rastelement 29 auf die Sammelschiene 6 vorspannt.

Zweckmäßig wird das elektrische Installationsgerät am Adapteroberteil 3 vormontiert, d.h. die Tragschiene 14 an der gewünschten Stelle mit dem Adapteroberteil 3 verbunden und anschließend das Installationsgerät an der Tragschiene 14 befestigt. Unabhängig hiervon wird das Adapterunterteil 2 zusammengesetzt, d.h. gegebenenfalls mit den Distanzfußstücken 28 versehen, die erforderlichen Kontaktfedern 25 in das Adapterunterteil 2 eingesteckt, der Betätigungshebel 30 mit Feder und Rastelement 29 montiert und das Adapterunterteil 2 mit der Abdeckplatte 31 versehen. Entsprechend dem Stromanschluß des Installationsgerätes werden mit den freien Enden der Kontaktfedern 25 die Leitungen verbunden und nach dem Zusammenstecken von Adapterunterteil 2 und Adapteroberteil 3 an das Installationsgerät angeschlossen.

Um das Adapterunterteil 2 und das Adapteroberteil 3 miteinander verbinden zu können, weist das Adapterunterteil im Bereich der freien Enden der Trennstege 17 und 18 sowie der Seitenwände 22 und 23 eine Vielzahl von in Längsrichtung des Adapterunterteiles 2 verlaufende Haltestege 38 auf, und an den entsprechenden Stellen das Adapteroberteil 3 auf seiner dem Adapterunterteil 2 zugewandten Seite Haltenasen 39, von denen in der Darstellung der Figur 1 nur drei unmittelbar sichtbar sind, während sich die Position der nicht sichtbaren Haltenasen 39 in der Ansicht der Oberseite des Adapteroberteiles 3 aus der Position der Formvertiefungen 40 zur Bildung der Haltenasen 39 ergibt. Die Verbindung von Adapteroberteil 3 und Adapterunterteil 2 erfolgt somit, indem das Adapteroberteil 3 versetzt zum Adapterunterteil 2 auf dieses aufgesteckt wird und dann, durch eine Relativbewegung von Adapterunterteil 2 und Adapteroberteil 3 in deren Trennebene, die Haltenasen 39 in die die Haltestege 38 hintergreifende Position überführt werden. Wie insbesondere der Darstellung der Figur 1 zu entnehmen ist, erfolgt dabei die Bewegung des Adapteroberteiles 3 in Richtung der einen Stirnplatte 35 des Adapterunterteiles 2, womit die auch im Bereich der vorlaufenden Schmalseite des Adapterteiles 3 angeordneten Haltenasen 39 in entsprechende, der Stirnplatte 35 zugeordnete Haltestege 38 des Adapterunterteiles 2 eingreifen.

Um ein unbeabsichtigtes Berühren der stromführenden Sammelschienen auszuschließen, ist im Bereich jeder der beiden Stirnseiten des Geräteträgers 1 ein plattenförmiger Übergreifschutz 41 vorgesehen. Jeder Übergreifschutz 41 ist im Bereich seines oberen Endes mittels zweier Steckbuchsen 42 auf korrespondierende Stegansätze 43 des Adapteroberteiles 3 und in seinem Mittelbereich mittels eines Federansatzes 44 auf einen Zapfenansatz 45 des Adapterunterteils 2 aufsteckbar. Der den Steckbuchsen 42 abgewandte Bereich des jeweiligen Übergreifschutzes 41 erstreckt sich über das Adapterunterteil 2 hinaus, so daß es in dessen Stirnseitenbereich die Sammelschienen von außen her unzugänglich macht. Figur 1 verdeutlicht, daß ein Übergreifschutz 41 mit Ausnehmungen 46 versehen sein kann, durch die elektrischen Zuleitungen von den Kontaktfedern 25 zu dem Stationsgerät geführt werden können.

Die Rastierung von Adapterunterteil 2 und Adapteroberteil 3 erfolgt in deren zusammengeschobener Stellung mittels einer Rastierzunge 47, die nachgiebig aus der Ebene des plattenförmigen Adapteroberteiles 3 in Richtung des Adapterunterteiles 2 vorsteht und in der zusammengeschobenen Position von Adapterunterteil 2 und Adapteroberteil 3 den die Trennstege 17 und 18 verbindenden Quersteg 48 hintergreift.

Schließlich ist auch in jede der Steckbuchsen 42 eine Rastierzunge 49 integriert, die bei aufgestecktem Übergreifschutz 41 in eine Ausnehmung 50 des betreffenden Stegansatzes 43 eingreift. Durch ein die jeweilige Steckbuchse 42 durchsetzendes Loch 51, das auf der dem Adapteroberteil 3 abgewandten Seite der Steckbuchse 42 vorgesehen ist, kann die Rastierung der zugeordneten Rastierzunge 49 durch Abheben der Rastierzunge 49 vom Stegansatz 43 mittels eines Hilfswerkzeuges erreicht werden. Entsprechendes gilt für die Rastierzunge 49, die gleichfalls mittels eines Hilfswerkzeuges in die nicht rastierende Stellung zurückbewegt werden kann.

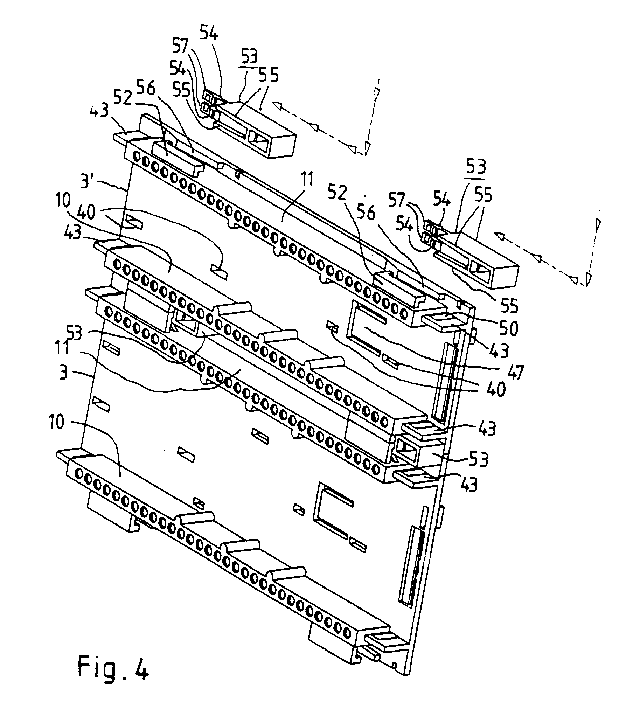

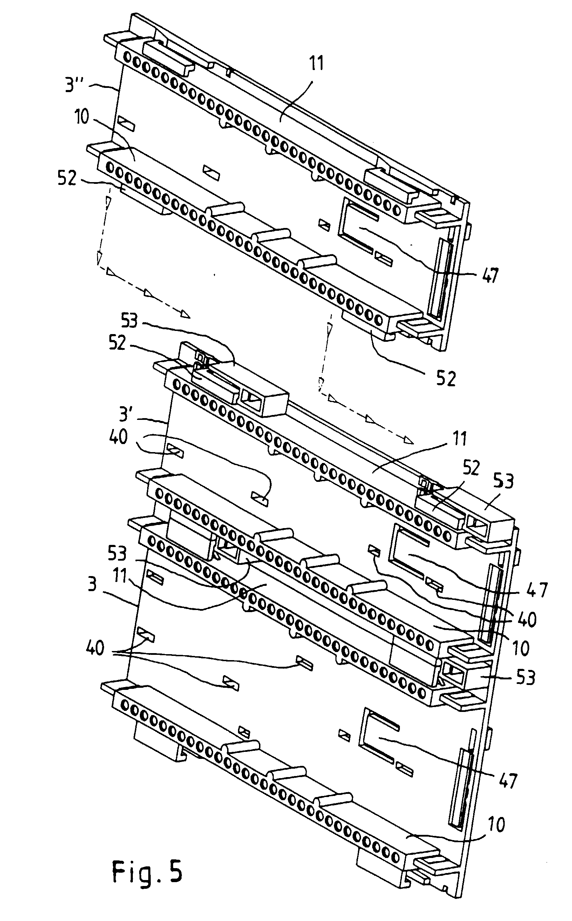

Figur 2 zeigt den zusammengebauten Geräteträger einschließlich der beiden Bauteile zum Gewährleisten des Übergreifschutzes, bei auf die Kontaktschienen 4 aufgesteckten Distanzfußstücken 28. Der Figur ist ferner zu entnehmen, daß das Adapteroberteil 3 im Bereich jedes Steges 10 bzw. 11 benachbart zu dem jeweiligen Stegansatz 43 mit einem in Längsrichtung des Steges 10 bzw. 11 hinterschnittenen Ansatz mit L-förmigem Profil versehen ist. Die Ansätze 52 des jeweiligen Steges 10 bzw. 11 dienen dem festen Verbinden von Adapteroberteilen 3 wie es insbesondere der Darstellung der Figuren 4 und 5 zu entnehmen ist. Die Figur 4 zeigt zwei bereits miteinander verbundene Adapteroberteile 3 und 3', die im Bereich der vier einander zugewandten Ansätze 52 der beiden Adapteroberteile 3 und 3' mittels zweier Verbindungselemente 53 verbunden sind. Jedes Verbindungselement 53 weist zwei, parallel zueinander angeordnete Rastierzungen 54 auf. Verbunden wird das jeweilige Verbindungselement 53 mit dem zugeordneten Adapteroberteil 3 bzw. 3', indem es mit seinem der jeweiligen Rastierzunge 54 zugeordneten Führungssteg 55 zwischen den Steg 11 des Adapteroberteiles 3 bzw. 3' und die parallel hierzu laufende Führungsfläche des L-förmigen Ansatzes 52 und eine plattenseitige, beabstandet zum Steg 11 bzw. 10 angeordnete Führungsleiste 56 eingesteckt wird, bis in der vollständig eingesteckten Position das eine Rastnase 57 aufweisende freie Ende der Rastierzunge 54 das zugeordnete stirnseitige Ende des Ansatzes 52 hintergreift. Aufgrund der Ausbildung der Rastierzunge 54 in Art einer Feder kann diese durch Wegdrücken vom Verbindungselement 52 mittels eines Hilfswerkzeuges wieder entarretiert werden. In der beschriebenen Art und Weise werden beide Verbindungselemente 53 mit dem Steg 11 des Adapteroberteiles 3 bzw. 3' in Art einer Klips-Verbindungverbunden. Die Verbindung mitdem angrenzenden Adapteroberteil 3' bzw. 3'', wie in Figur 5 gezeigt, erfolgt durch Aufstecken des Adapteroberteiles 3' bzw. 3'' auf die Rastierzungen 54 der beiden bereits mit dem Adapteroberteil 3 bzw. 3' verbundenen Verbindungselemente 53. Die Bewegungsrichtungen zum Verbinden der Adapteroberteile sind in den Figuren 4 und 5 mit Pfeilen verdeutlicht.

Die Figuren 4 und 5 veranschaulichen, daß mittels der Verbindungselemente 53 eine beliebige Anzahl von Adapteroberteilen zu einer starren Einheit miteinander verbunden werden kann, wobei die Adapteroberteile im Bereich deren Plattenlängsseiten aneinanderliegen und die Verbindungselemente den Raum zwischen den Stegen 11 und 12 benachbarter Adapterteile vollständig ausfüllen.

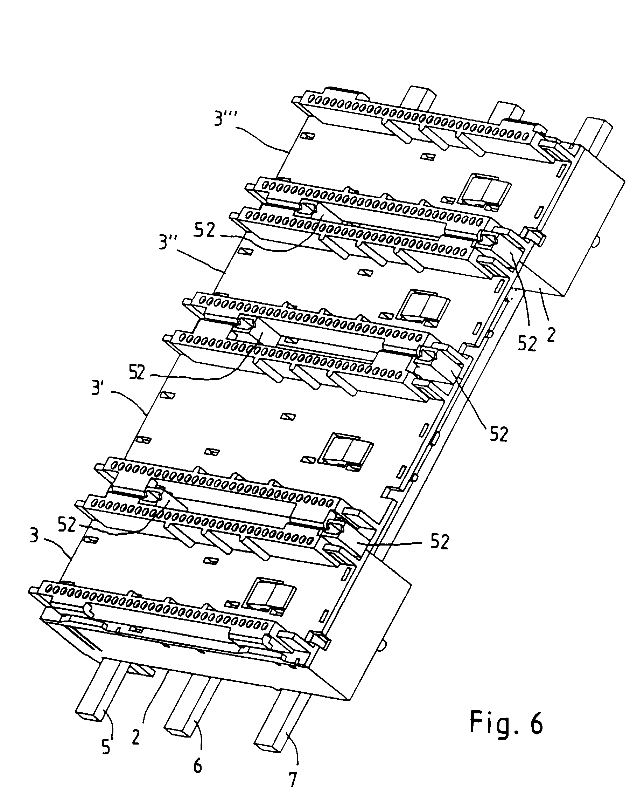

Die Figuren 3 und 6 verdeutlichen, daß grundsätzlich die Möglichkeit besteht, Adapteroberteilen, vorliegend den Adapteroberteilen 3' und 3'', kein Adapterunterteil zuzuordnen, sondern nur den äußeren Adapteroberteilen 3 und 3"'. Die Adapteroberteile 3' und 3'' bilden damit eine Brücke zwischen den äußeren Adapteroberteilen 3 und 3''' mit den zugeordneten Adapterunterteilen 2. Die Stromzuführung erfolgt in diesem Fall ausschließlich über die Adapterunterteile 2 zu den auf den Adapteroberteilen 3, 3', 3" und 3''' angeordneten Installationsgeräten.

Der Darstellung der Figur 5 ist insbesondere zu entnehmen, daß die Anordnung der Haltenasen 39 bzw. der Formvertiefungen 40 für die Haltenasen 39 im jeweiligen Adapteroberteil 3 und 3' unabhängig von der Breite bzw. dem Abstand der Stege 10 und 11 des jeweiligen Adapteroberteiles 3 bzw. 3' ist. Dies bedeutet, daß immer identische Adapterunterteile 2 zur Bildung des Geräteträgers 1 Verwendung finden, unabhängig davon, welche Breite die Platte des jeweiligen Adapteroberteiles aufweist.

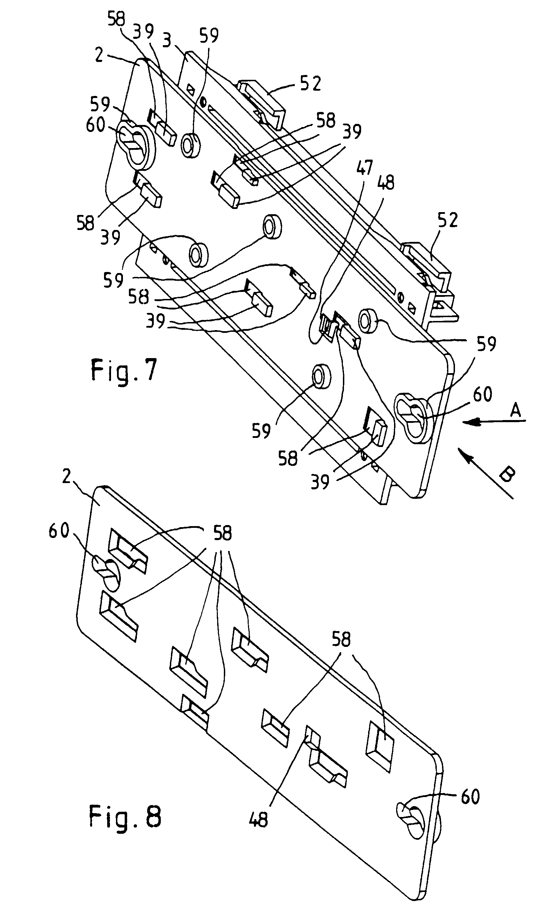

Die Figuren 7 und 8 zeigen eine abgewandelte Gestaltung des Adapterunterteiles 2 bei unveränderter Gestaltung des Adapteroberteiles 3. Das Adapterunterteil 2 dient dem Anbringen an einer nicht dargestellten Halterung, die als Wand eines Schaltschrankes ausgebildet ist. Hierfür ist das Adapterunterteil 2 als ebene Platte ausgebildet, die in Aufsteckrichtung B des Adapterunterteiles 2 auf das Adapteroberteil 3 mit Ausnehmungen 58 versehen ist, die die Funktion der Haltestege 38 nach der vorher beschriebenen Ausführungsform beinhalten und mit denen die Haltenasen 39 des Adapteroberteiles 3 zusammenwirken. Da die Haltenasen 39 über die Plattenebene des Adapterunterteiles 2 hinausstehen, ist dieses auf dieser Seite mit Distanzringen 59 versehen, deren Stärke zumindest der der Haltenasen 59 entspricht. Zwei der Distanzringe 59 weisen ein in Aufschieberichtung B gerichtetes Langloch 60 auf. Das Adapterunterteil 2 kann auf einfache Art mit der Halterung befestigt werden, indem zwei Befestigungsschrauben durch die schlüssellochförmigen Langlöcher 60 gesteckt und im Bereich des dem Kreisabschnitt entfernten Endes des Schlüsselloches positioniert werden. Figur 8 zeigt eine Ansicht der dem Adapteroberteil 3 zuzuwendenden Fläche des Adapterunterteiles 2. Auch bei der Ausführungsform nch den Figuren 7 und 8 können, wie zur Ausführungsform nach der Figur 6 beschrieben, mehrere Adapteroberteile miteinander verbunden werden, Adapterunterteile brauchen nur im Bereich der beiden äußeren Adapteroberteile vorgesehen zu werden.

## Patentansprüche

1. Geräteträger für elektrische Installationsgeräte mit einem für die Aufnahme mindestens eines Installationsgerätes vorgesehenen Adapteroberteil (3) und mit einem mit einer Halterung verbindbaren Adapterunterteil (2), wobei das Adapteroberteil (3) und das Adapterunterteil (2) miteinander verbindbar sind, **dadurch gekennzeichnet, dass** jeder Adapteroberteil (3, 3', 3", 3"') wahlweise mit einem an einer Halterung in Art einer Wandung befestigbaren Adapterunterteil (2) oder mit einem an einer Halterung in Art eines Sammelschienensystems (5, 6, 7) befestigbaren Adapterunterteil (2) zusammensteckbar und in der zusammengesteckten Position rastierbar ist, wobei mit einem Adapterunterteil (2) definierter Baugrösse Adapteroberteile (3, 3', 3", 3"') unterschiedlicher Baugrösse verbindbar sind, und **dass** jeder Adapteroberteil (3) mit einem dem Geräteträger (1) nicht zugeordneten, zur Aufnahme mindestens eines Installationsgerätes bestimmten, weiteren Adapteroberteil (3') gleicher oder unterschiedlicher Baugrösse verbindbar ist.

2. Geräteträger nach Anspruch 1, **dadurch gekennzeichnet, dass** Adapteroberteile (3, 3', 3", 3"') unterschiedlicher Baugrösse im Verbindungsbereich zum Adapterunterteil (2) identisch ausgebildet sind.

3. Geräteträger nach Anspruch 1 oder 2, **dadurch gekennzeichnet, dass** die Verbindung von Adapteroberteil (3) und Adapterunterteil (2) durch Zusammenstecken von Adapteroberteil (3) und Adapterunterteil (2) sowie deren anschliessende Relativbewegung in der Trennebene zwischen Adapteroberteil (3) und Adapterunterteil (2) erfolgt, wobei das Adapteroberteil (3) Haltenasen (39) aufweist, die beim Relativbewegen der Teile (2, 3) Haltestege (38) am Adapterunterteil (2) hintergreifen.

4. Geräteteräger nach einem der Ansprüche 1 bis 3, **dadurch gekennzeichnet, dass** die Rastierung von Adapteroberteil (3) und Adapterunterteil (2) mittels mindestens einer Rastierzunge (47) des Adapteroberteiles (3) erfolgt, die in der Rastierposition einen Rastiersteg (48) des Adapterunterteiles (2) hintergreift.

5. Geräteträger nach einem der Ansprüche 1 bis 4, **dadurch gekennzeichnet, dass** das Adapteroberteil (3) plattenförmig ausgebildet ist.

6. Geräteträger nach Anspruch 1, **dadurch gekennzeichnet, dass** das Adapterunterteil (2) plattenförmig ausgebildet ist und Ausnehmungen (60) zum Aufhängen des Adapterunterteiles (2) in mit der Wandung verbundenen Befestigungsmitteln aufweist.

7. Geräteträger nach Anspruch 1, **dadurch gekennzeichnet, dass** das Adapterunterteil (2) kastenförmig ausgebildet ist und auf seiner dem Adapteroberteil (3) abgewandten Seite Hakenansätze (4) zum Hintergreifen der Sammelschienen (5, 6, 7) aufweist.

8. Geräteträger nach Anspruch 7, **dadurch gekennzeichnet, dass** im kastenförmigen Adapterunterteil (2) Mittel zum Festlegen des Geräteträgers (1) in der Ebene der Sammelschienen (5, 6, 7) senkrecht zu deren Längserstreckung sowie elektrische Kontakte (25) für die Sammelschienen (5, 6, 7), die über elektrische Leitungen mit dem Installationsgerät verbunden sind, vorgesehen sind.

9. Geräteträger nach Anspruch 7 oder 8, **dadurch gekennzeichnet, dass** das kastenförmige Adapterunterteil (2) im Bereich jeder seiner über die Sammelschienen (5, 6, 7) herausragenden beiden Enden mit einem plattenförmigen Uebergreifschutz (41) versehen ist, der mit dem Adapterunterteil (2) und dem Adapteroberteil (3) rastierend verbindbar ist.

10. Geräteträger nach Anspruch 9, **dadurch gekennzeichnet, dass** der jeweilige Uebergreifschutz (41) Ansätze (42, 44) aufweist, die nach dem Verbinden von Adapteroberteil (3) und Adapterunterteil (2) das Adapterunterteil (2) auf der den Sammelschienen (5, 6, 7) zugewandten Seite und das Adapteroberteil (3) auf der den Sammelschienen (5, 6, 7) abgewandten Seite hintergreifen, wobei Klips-Verbindungen zum Rastieren des Uebergreifschutzes (41) mit dem Adapteroberteil (3) und dem Adapterunterteil (2) vorgesehen sind.

11. Geräteträger nach Anspruch 1, **dadurch gekennzeichnet, dass** weitere Adapteroberteile (3) mit einem anderen Adapterunterteil (2) verbunden ist.

12. Geräteträger nach Anspruch 1, **dadurch gekennzeichnet, dass** die Adapteroberteile (3, 3"') zweier benachbarter, im Abstand angeordneter Geräteträger (1, 1) mittels einer oder mehreren, weiteren Adapteroberteilen (3', 3") miteinander verbunden sind, die den Abstand der den beiden Geräteträgern (1, 1) zugeordneten Adapteroberteilen (3, 3"') überbrücken.

13. Geräteträger nach einem der Ansprüche 11 bis 12, **dadurch gekennzeichnet, dass** das Adapteroberteil (3) und das weitere Adapteroberteil (3') in den einander zugewandten Bereichen mittels Verbindungselementen (53) miteinander verbindbar sind.

14. Geräteträger nach Anspruch 13, **dadurch gekennzeichnet, dass** das jeweilige Verbindungselement (53) zum Verbinden des Adapteroberteiles (3) und des weiteren Adapteroberteiles (3') mit diesem in Art einer Klips-Verbindung rastierbar ist.

15. Geräteträger nach Anspruch 14, **dadurch gekennzeichnet, dass** der jeweilige Steg (10, 11) des Adapteroberteiles (3) und des weiteren Adapteroberteiles (3') auf der dem jeweils anderen Adapteroberteil (3', 3) zugewandten Seite mit mindestens einem in Längsrichtung des Steges (10, 11) hinterschnittenen Ansatz (52) versehen ist, Wobei die Ansätze (52) der zu verbindenden Adapteroberteile (3, 3') bezüglich deren Trennlinie spiegelbildlich zueinander angeordnet sind und das den beiden Ansätzen (52) zugeordnete Verbindungselement (53) mit zwei Stegen (55) versehen ist, die in die hinterschnittenen Bereiche einschiebbar sind.

## Claims

1. An equipment carrier for electrical installation equipment, comprising an adapter top (3) provided to receive at least one piece of installation equipment and further comprising an adapter base (2) which can be joined to a support, the top (3) and base (2) being interconnectable, **characterised in that** each adapter top (3, 3', 3", 3"') can be assembled optionally with an adapter base (2) capable of being fixed to a support of the nature of a wall, or with an adapter base (2) capable of being fixed to a support of the nature of a bus bar system (5, 6, 7), and can be locked in the assembled position, adapter tops (3, 3', 3", 3"') of different overall size being connectable to an adapter base (2) of defined overall size, and that each adapter top (3) can be joined to another adapter top (3') of the same or different overall size which is not associated with the equipment carrier (1) and is intended to receive at least one piece of installation equipment.

2. An equipment carrier according to claim 1, **characterised in that** adapter tops (3, 3', 3", 3"') of different overall size are of identical structure in the region joined to the adapter base (2).

3. An equipment carrier according to claim 1 or 2, **characterised in that** the joining of the adapter top (3) and adapter base (2) is effected by assembly of the top (3) and base (2) and their subsequent relative movement in the dividing plane between the top (3) and base (2), the top (3) having holding lugs (39) which engage behind holding webs (38) on the base (2) during the relative movement of the parts (2, 3).

4. An equipment carrier according to any of claims 1 to 3, **characterised in that** the adapter top (3) and adapter base (2) are locked by means of at least one locking tab (47) on the top (3), which engages behind a locking web (48) on the base (2) in the locking position.

5. An equipment carrier according to any of claims 1 to 4, **characterised in that** the adapter top (3) is plate-shaped.

6. An equipment carrier according to claim 1, **characterised in that** the adapter base (2) is in plate form and contains apertures (60) for hooking the base (2) into fastening means joined to the wall.

7. An equipment carrier according to claim 1, **characterised in that** the adapter base (2) is box-shaped and has hook attachments (4) at its side facing away from the top (3), for engaging behind the bus bars (5, 6, 7)

8. An equipment carrier according to claim 7, **characterised in that** means for fixing the equipment carrier (1) in the plane of the bus bars (5, 6, 7) perpendicular to their length, and electrical contacts 25 for the bus bars (5, 6, 7), which are connected to the installation equipment by electrical leads, are provided in the box-shaped adapter base (2).

9. An equipment carrier according to claim 7 or 8, **characterised in that** the box-shaped adapter base (2) is provided with an overlap protector in plate form (41) in the region of each of its two ends projecting beyond the bus bars (5, 6, 7), the protector being connectable to the adapter base (2) and adapter top (3) with a locking action.

10. An equipment carrier according to claim 9, **characterised in that** each respective overlap protector (41) has attachments (42, 44), which engage behind the adapter base (2) at the side towards the bus bars (5, 6, 7) and behind the adapter top (3) at the side remote from the bus bars (5, 6, 7) when the top (3) and base (2) have been joined, clip connections being provided to lock the overlap protector (41) to the top (3) and base (2).

11. An equipment carrier according to claim 1, **characterised in that** additional adapter tops (3) are joined to another adapter base (2).

12. An equipment carrier according to claim 1, **characterised in that** the adapter tops (3, 3"') of two adjacent, spaced equipment carriers (1,1) are joined together by means of one or more additional adapter tops (3', 3"), which bridge the gap between the tops (3, 3'") associated with the two equipment carriers (1, 1).

13. An equipment carrier according to claim 11 or 12, **characterised in that** the adapter top (3) and additional adapter top (3') can be joined together by connecting members (53) in the regions facing towards each other.

14. An equipment carrier according to claim 13, **characterised in that** for joining the adapter top (3) to the additional top (3') the respective connecting member (53) can be locked to the latter in the manner of a clip connection.

15. An equipment carrier according to claim 14, **characterised in that** the respective web (10, 11) of the adapter top (3) and additional adapter top (3') is provided at the side towards the respective other top (3', 3) with at least one attachment (52) which is undercut longitudinally of the web (10, 11), the attachments (52) of the tops (3, 3') to be joined being arranged in mirror image to each other relative to their dividing line, and the connecting member (53) associated with the two attachments (52) being provided with two webs (55) which can be slid into the undercut regions.

## Revendications

1. Support d'appareils pour appareils d'installation électrique avec une partie supérieure d'adaptateur (3) prévue pour recevoir au moins un appareil d'installation et avec une partie inférieure d'adaptateur (2) qui peut être reliée à une fixation, la partie supérieure d'adaptateur (3) et la partie inférieure d'adaptateur (2) pouvant être reliées ensemble,
caractérisé en ce que
chaque partie supérieure d'adaptateur (3, 3', 3", 3"') peut être réunie par enfichage au choix avec une partie inférieure d'adaptateur (2), qui peut être fixée à une fixation du type d'une paroi ou à une partie inférieure d'adaptateur (2), qui peut être fixée à une fixation du type d'un système de barre collectrice (5, 6, 7) et peut être encliquetée dans la position d'enfichage, des parties supérieures d'adaptateur (3, 3', 3", 3"') de différentes grandeurs pouvant être reliées à une partie inférieure d'adaptateur (2) de grandeur définie, et
en ce que
chaque partie supérieure d'adaptateur (3) peut être reliée à une autre partie supérieure d'adaptateur (3') de même grandeur ou de grandeur différente, non associée au support d'appareil (1), et servant à recevoir au moins un appareil d'installation.

2. Support d'appareils selon la revendication 1,
caractérisé en ce que
les parties supérieures d'adaptateur (3, 3', 3", 3"') de différentes grandeurs sont constituées de façon identique dans la zone de liaison avec la partie inférieure d'adaptateur (2).

3. Support d'appareils selon la revendication 1 ou 2,
caractérisé en ce que
la liaison de la partie supérieure d'adaptateur (3) et de la partie inférieure d'adaptateur (2) par enfichage de la partie supérieure d'adaptateur (3) et de la partie inférieure d'adaptateur (2) et leur mouvement relatif suivant ont lieu dans le plan de séparation situé entre la partie supérieure d'adaptateur (3) et la partie inférieure d'adaptateur (2), la partie supérieure d'adaptateur (3) présentant des nez d'arrêt (39) qui viennent en prise sur la partie inférieure d'adaptateur (2) par derrière lors des mouvements relatifs des parties (2, 3).

4. Support d'appareils selon la revendication 1 à 3,
caractérisé en ce que
l'encliquetage de la partie supérieure d'adaptateur (3) et de la partie inférieure d'adaptateur (2) a lieu au moyen d'une languette d'encliquetage (47) de la partie supérieure d'adaptateur (3), languette qui vient en prise par derrière dans la position encliquetée d'une entretoise d'encliquetage (48) de la partie inférieure d'adaptateur (2).

5. Support d'appareils selon la revendication 1 à 4,
caractérisé en ce que
la partie supérieure d'adaptateur (3) est constituée en forme de plaque.

6. Support d'appareils selon la revendication 1,
caractérisé en ce que
la partie inférieure d'adaptateur (2) est constituée en forme de plaque et présente des évidements (60) servant à accrocher la partie inférieure d'adaptateur (2) dans des moyens de fixation reliés à la paroi.

7. Support d'appareils selon la revendication 1,
caractérisé en ce que
la partie inférieure d'adaptateur (2) est constituée en forme de boîte et présente sur sa face située à l'opposé de la partie supérieure d'adaptateur (3) des appendices formant crochet (4) pour venir en prise par derrière avec les barres collectrices (5, 6, 7).

8. Support d'appareils selon la revendication 7,
caractérisé en ce que
dans la partie inférieure d'adaptateur (2) en forme de boîte, il est prévu des moyens pour fixer le support d'appareils (1) dans le plan des barres collectrices (5, 6, 7) perpendiculairement à leur étendue longitudinale et des contacts électriques (25) pour les barres collectrices (5, 6, 7) qui sont reliées au moyen de lignes électriques à l'appareil d'installation.

9. Support d'appareils selon la revendication 7 ou 8,
caractérisé en ce que
la partie inférieure d'adaptateur (2) en forme de boîte est pourvue dans la zone de chacune de ses deux extrémités qui font saillie par rapport aux barres collectrices (5, 6, 7) d'une protection enveloppante (41) en forme de plaque qui peut être reliée à la partie inférieure d'adaptateur (2) et à la partie supérieure d'adaptateur (3) en s'encliquetant.

10. Support d'appareils selon la revendication 9,
caractérisé en ce que
la protection enveloppante (41) présente des appendices (42, 44) qui, après la réunion de la partie supérieure d'adaptateur (3) et de la partie inférieure d'adaptateur (2), viennent en prise par derrière avec la partie inférieure d'adaptateur (2) sur la face tournée vers les barres collectrices (5, 6, 7) et avec la partie supérieure d'adaptateur (3) sur la face située à l'opposé des barres collectrices (5, 6, 7), des liaisons par clips étant prévues pour encliqueter la protection enveloppante (41) avec la partie supérieure d'adaptateur (3) et la partie inférieure d'adaptateur (2).

11. Support d'appareils selon la revendication 1,
caractérisé en ce que
d'autres parties supérieures d'adaptateur (3) sont reliées à une autre partie inférieure d'adaptateur (2).

12. Support d'appareils selon la revendication 1,
caractérisé en ce que
les parties supérieures d'adaptateur (3, 3"') de deux supports d'appareils voisins (1, 1), disposés à une certaine distance l'un de l'autre, sont reliées ensemble au moyen d'une ou plusieurs autres parties supérieures d'adaptateur (3, 3"') qui enjambent l'intervalle des parties supérieures d'adaptateur (3, 3"') associées aux deux supports d'appareils (1, 1).

13. Support d'appareils selon l'une des revendications 7 ou 8,
caractérisé en ce que
la partie supérieure d'adaptateur (3) et l'autre partie supérieure d'adaptateur (3') peuvent être reliées ensemble au moyen d'éléments de liaison (53) dans les zones tournées l'une vers l'autre.

14. Support d'appareils selon la revendication 13,
caractérisé en ce que
l'élément de liaison correspondant (53) pour relier la partie supérieure d'adaptateur (3) et l'autre partie supérieure d'adaptateur (3') peut être encliqueté avec celle-ci à la manière d'une liaison par clips.

15. Support d'appareils selon la revendication 14,
caractérisé en ce que
l'entretoise correspondante (10, 11) de la partie supérieure d'adaptateur (3) et de l'autre partie supérieure d'adaptateur (3') est pourvue sur la face tournée vers respectivement l'autre partie supérieure d'adaptateur (3', 3) d'au moins un appendice (52) formé en contre-dépouille dans le sens longitudinal de l'entretoise (10, 11), les appendices (52) des parties supérieures d'adaptateur à relier (3, 3') étant disposées de façon symétrique l'une l'autre, par rapport à leur ligne de séparation et l'élément de liaison (53) associé aux deux appendices (52) étant pourvu de deux entretoises (55) qui peuvent s'enfoncer dans les zones à contre-dépouille.
